# EUROPEAN PATENT SPECIFICATION

(11) **EP 4 211 918 B1**
(45) Date of publication and mention of the grant of the patent: **03.09.2025**
(21) Application number: 20957133.0
(22) Date of filing: 15.10.2020
(51) Int. Cl.: H04W 24/00, H04W 56/00

(54) **RESOURCE CONFIGURATION USING THE BURST SPREAD PARAMETER FOR WIRELESS COMMUNICATION SYSTEMS**
RESSOURCENKONFIGURATION UNTER VERWENDUNG DES BURST-SPREIZPARAMETERS FÜR DRAHTLOSE KOMMUNIKATIONSSYSTEME
CONFIGURATION DE RESSOURCES UTILISANT LE PARAMÈTRE D'ÉTALEMENT DE RAFALE POUR DES SYSTÈMES DE COMMUNICATION SANS FIL

(43) Date of publication of application: 19.07.2023
(73) Proprietor: ZTE Corporation, Shenzhen, Guangdong 518057 (CN)
(72) Inventor: TAN, Jie, Shenzhen, Guangdong 518057 (CN); SHA, Xiubin, Shenzhen, Guangdong 518057 (CN); DAI, Bo, Shenzhen, Guangdong 518057 (CN); LU, Ting, Shenzhen, Guangdong 518057 (CN)
(74) Representative: Vossius & Partner Patentanwälte Rechtsanwälte mbB
(86) International application number: PCT/CN2020/121205
(87) International publication number: WO 2022/077354

(56) References cited:
- WO-A1-2013/023354
- WO-A2-2016/046611
- CN-A- 105 340 210
- CN-A- 107 852 684
- CN-A- 110 235 457
- US-A1- 2015 334 769
- US-A1- 2020 322 908
- HUAWEI ET AL: "Discussion on TA group management", 3GPP DRAFT; R2-113285 DISCUSSION ON TA GROUP MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495423
- HT MMOBILE INC: "TA group change for SCell", 3GPP DRAFT; R2-115199, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540988
- NOKIA ET AL.: "Propagation delay compensation", 3GPP TSG-RAN WG2 MEETING #109-E,R2-2001047, 6 March 2020 (2020-03-06), XP051849456

## Description

### TECHNICAL FIELD

This document is directed generally to wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques will provide support for an increased number of users and devices, as well as support for higher data rates.
WO 2013/023354 A1 relates to user equipment assisted configuration of timing advance groups.
3GPP R2-113285 relates to TA group management.
3GPP R2-115199 relates to TA group change for SCell.
US 2015/334769 A1 relates to an apparatus and method of transmitting/receiving signals in mobile communication system supporting carries.
US 2020/322908 A1 relates to a reference timing delivery to user equipment with propagation delay compensation.
CN 110 235 457 A relates to systems and methods for cell range extension.
WO 2016/046611 A2 relates to a method of switching uplink and downlink subframes and apparatus thereof.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

This document relates to methods, systems, and devices for resource configuration using the burst spread parameter in mobile communication technology, including 5th Generation (5G) and New Radio (NR) communication systems. In an example, the burst spread parameter is introduced into the radio access network (RAN) specification, which advantageously mitigates the data transmission delay problem caused by jitter.

The above and other aspects and their implementations are described in greater detail in the drawings, the descriptions, and the claims.

### BRIEF DESCRIPTION OF THE DRAWINGS

FIG. 1 shows an example of a base station (BS) and user equipment (UE) in wireless communication, in accordance with some embodiments of the presently disclosed technology.
FIG. 2 shows an example of semi-persistent scheduling (SPS) resource groups and the jitter in a wireless channel.
FIG. 3 shows an example of a message flow for indicating that an SPS resource group is configured only for packets belonging to the same QoS flow.
FIG. 4 shows an example of a message flow for a deactivation indication in a predefined downlink control information (DCI) transmission.
FIG. 5 shows an example of a message flow for updating resources when the burst spread parameter changes.
FIG. 6 shows an example of a message flow for calculating and transmitting the propagation delay from the network node to the wireless device.
FIGS. 7 and 8 show examples of MAC CE formats for fixed granularity.
FIGS. 9 and 10 show examples of MAC CE formats for variable granularity.
FIG. 11 shows an example of a message flow for calculating and transmitting the propagation delay to configure the wireless device to perform propagation delay compensation.
FIG. 12 shows an example of a message flow for transmitting reference time information to configure the wireless device to perform propagation delay compensation.
FIGS. 13-16 show examples of wireless communication methods.
FIG. 17 is a block diagram representation of a portion of an apparatus in which the disclosed techniques may be implemented.

### DETAILED DESCRIPTION

In the New Radio (NR) access standard, a burst spread parameter is introduced in the application layer to avoid data transmission delays caused by jitter during Time-Sensitive Network (TSN) quality of service (QoS) transmissions. In some implementations, the burst spread is sent by the Policy Control Function (PCF) to the Session Management Function (SMF), which uses it to determine a burst spread Time Sensitive Communications (TSC) Assistance Information (TSCAI) parameter. When scheduling packets on different bridges, a particular packet is scheduled after other higher priority packets that are received, e.g. from other ports, at each bridge. This behavior creates a jitter on the (periodic) packet arrival time of a TSN flow, in the cycle time, and configured for this TSN flow. Alternatively, this jitter is generated when downlink data is sent on the N6 (interface between the Data Network (DN) and the User Plane Function (UPF)), which affects the data arrival time. Embodiments of the disclosed technology overcome the aforementioned TSN QoS transmission jitter and other potential jitter sources by configuring SPS resources based on the burst spread parameter.

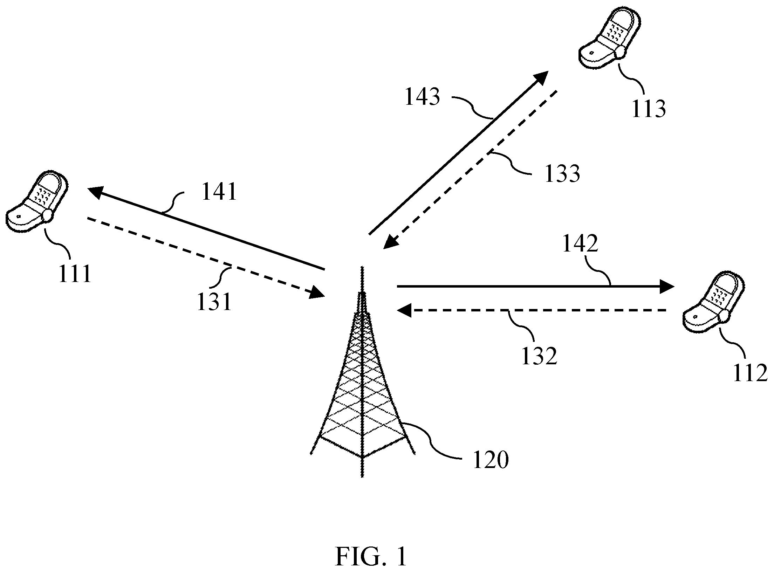

FIG. 1 shows an example of a wireless communication system (e.g., an LTE, 5G or New Radio (NR) cellular network) that includes a BS 120 and one or more user equipment (UE) 111, 112 and 113. In some embodiments, the downlink transmissions (141, 142, 143) include a configurations of pre-configured SPS resources. The UE may be, for example, a smartphone, a tablet, a mobile computer, a machine to machine (M2M) device, a terminal, a mobile device, an Internet of Things (IoT) device, and so on.

The present document uses section headings for ease of understanding and do not limit the embodiments and techniques to the corresponding sections. As such, embodiments from one section can be combined with embodiments from other sections. Furthermore, the present document uses examples from the 3GPP New Radio (NR) network architecture and 5G protocol only to facilitate understanding and the disclosed techniques and embodiments may be practiced in other wireless systems that use different communication protocols than the 3GPP protocols.

### 1. Examples of preconfiguring multiple continuous SPS resources

In some embodiments, the gNB needs to pre-configure multiple continuous semi-persistent scheduling (SPS) resources for the UE. However, not all resources need to be utilized. These embodiments optimize the pre-configuration of multiple continuous SPS resources based on the principle of resource saving.

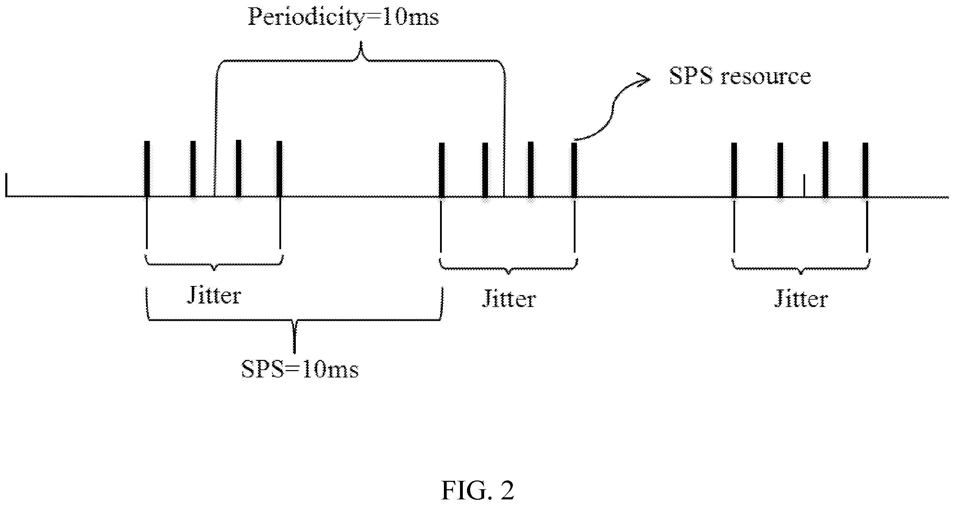

In an example, the multiple consecutive SPS resources can be configured based on the transmission period and burst spread in the same QoS flow. Thus, multiple SPS groups can be pre-configured through BWP-DownlinkDedicated, wherein the UE receives a configuration from the gNB for a preconfigured set of semi-persistent scheduling (SPS) resources with a bundling relationship. The bundling relationship comprises a subset of the pre-configured group of SPS resources for a same service within a time window in a transmission cycle, a subset of the pre-configured group of SPS resources for a same logical channel, or a subset of the pre-configured group of SPS resources for the same service. Each SPS group is pre-configured on the corresponding physical channel and has the same priority during data transmission. As shown in the example in FIG. 2, when both the service data transmission period and SPS scheduling period are 10 ms and the value of burst spread is 4 ms, four consecutive SPS resources are pre-configured in the SPS group.

As shown in FIG. 2, the range of each SPS group is larger than or equal to the range of burst spread. In an example, a hybrid automatic repeat request (HARQ) process number value in the downlink control information (DCI) format indicates the start position of the SPS in the SPS group to be activated, and a 3-bit field can be used to indicate the number of SPS activated continuously in the SPS group.

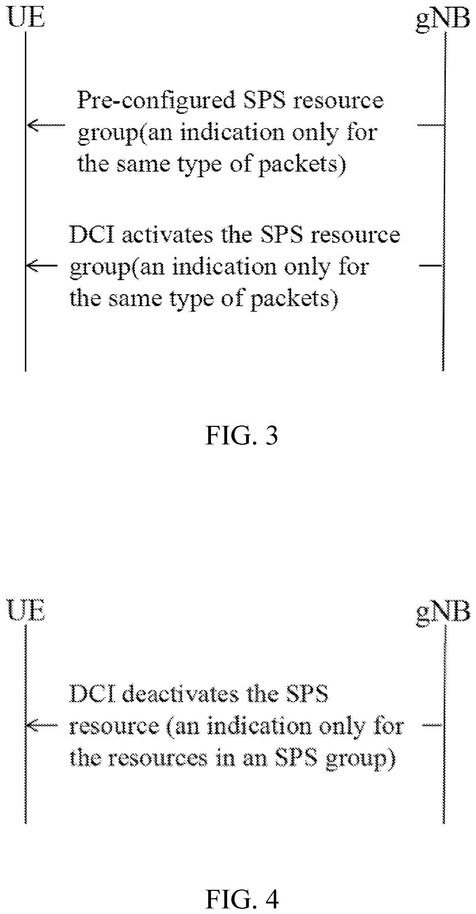

In this example, the UE receives a packet in a pre-configured SPS resource group, but does not receive other packets in the SPS resource group. Herein, the gNB provides an indication to the UE that the SPS resource group is only for packets of the same QOS flow. A shown in FIG. 3, this indication contains at least one of the following:
(1) When the SPS resource group is pre-configured, it contains an indication only for the same type of packets; and
(2) When the DCI activates the SPS resource group, it contains an indication only for the same type of packets.

In some embodiments, when the UE has received packets of the same QOS flow on the activated SPS resource group or the gNB has no packet to be sent in the current time window, the UE needs to know that no packets of the same type need to be received in the current period before releasing the SPS resources in this time window. In this case, the gNB provides an indication to the UE to deactivate the activated SPS resource in the current time window through the deactivated DCI. The value of HARQ process number or index in the DCI indicates the start position of the SPS in the SPS group to be deactivated, and the DCI contains an indication for deactivation within the group. This explicit indication is only applicable to the release of SPS resources in an SPS resource group. In this case, when UE receives the gNB in one or more resources of the configured group of SPS resources in the time window, the UE releases the some or all other SPS resources in the current time window. This implicit indication is only applicable to the release of SPS resources in an SPS resource group, and an example of the predefined DCI is shown in FIG. 4.

### 2. Examples of the burst spread parameter changing

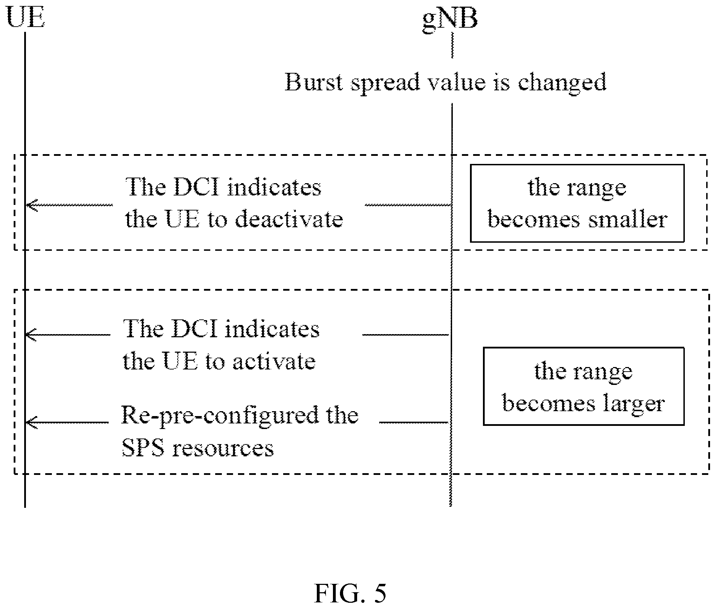

In some embodiments, if the burst spread in the same service of the TSN is changed, the pre-configured SPS resources are updated to meet the downlink scheduling requirement. The value of the burst spread (or alternatively, the range of the burst spread value) may increase or decrease, as shown in FIG. 5.

In the case when the range of the burst spread value becomes smaller, the HARQ process number value or index value in the deactivated DCI format indicates the starting position of the remaining activated SPS resources after some SPS resources in the SPS group are deactivated. In an example, a 3-bit field is used to indicate the number of remaining continuously activated SPS resources in the SPS group.

In the case when the range becomes larger, the operations performed depend on whether the SPS resources have been pre-configured or not. If the larger burst spread value can be handled in the pre-configured SPS resource group (i.e., the SPS resources have been pre-configured), the HARQ process number value or index value in the activated DCI format indicates the starting position of the SPS in the activated SPS group, and a 3-bit field is used to indicate the number of continuously activated SPSs in the SPS group. However, if the larger value of the burst spread parameter is not included in the pre-configured SPS resource group (e.g., the SPS resources have not been pre-configured), the SPS resource group is reconfigured through gNB (e.g., Radio Resource Control (RRC) Reconfiguration information), and DCI is used to indicate the UE to activate the SPS resource.

### 3. Examples of measuring the propagation delay using RTT or a large SCS

In some embodiments, the propagation delay between the network node and the wireless device can be measured by using the round-trip time (RTT) method or by using a large subcarrier spacing (SCS). A large subcarrier spacing corresponds to the UE using a small subcarrier spacing (15 kHz, 30 kHz or 60 kHz) to transmit service information, and the gNB measuring the uplink signals of the UE using a large subcarrier spacing (120 kHz or 240 kHz) to obtain the propagation delay value.

When the propagation delay is measured by using the RTT method or the large subcarrier spacing, at least one of the following conditions should be satisfied:
- Initial access;
- The UE requesting the reference time information;
- After the gNB sends the indication information, the indication information indicates at least one of the following operations: the UE performs a propagation delay compensation (PDC) operation or the UE performs propagation delay measurement; and
- Performing periodic measurements based on the clock update period requested by the UE.

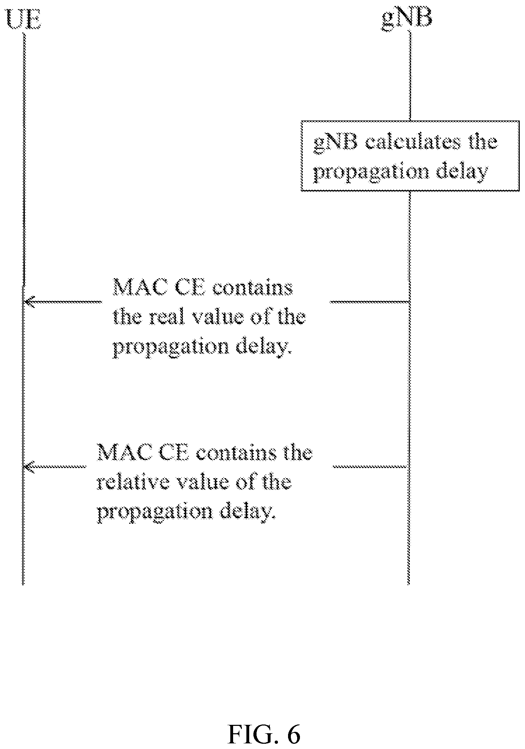

As shown in FIG. 6, when the gNB calculates the propagation delay and UE performs propagation delay compensation (PDC), the gNB sends the measurement value of the propagation delay to the UE. In an example, the granularity of the measurement value can be fixed or variable.

In this embodiments, a fixed granularity is characterized by at least one of the following:
- The value is in nanoseconds; and
- The value is determined by multiplying the Timing Advance (TA) value of a predefined SCS (e.g., 15kHz) by different factors. In an example, this factor is 1/2, 1/4, 1/8, or 1/16.

In this embodiments, a variable granularity is characterized by at least one of the following:
- A granularity group is composed of multiple values in nanoseconds; and
- The granularity group is composed of multiple different granularities that are determined by multiplying the TA values corresponding to a predefined SCS (e.g., 15kHz) by different factors. In an example, this factor is 1/2, 1/4, 1/8, or 1/16.

If the granularity of the measured value is variable, an indication indicating the granularity of the current measurement value should be included when sending the measurement value of the propagation delay.

In some embodiments, at least one of the following conditions are included to trigger the gNB to send the measured value:
- gNB identifies that the current UE needs to perform propagation delay compensation;
- gNB receives the reference time request;
- gNB satisfies the condition of periodically sending the clock information; and
- gNB identifies that the difference between the measured value and the last transmitted value is about to be greater than the maximum relative value.

In some embodiments, at least one of the following are used by gNB to transmit the measured value:
- The true value of propagation delay measurement is always sent; and
- gNB sends the relative value of propagation delay measurement after the true value is sent, where the relative value is calculated based on the real value of the previous transmission.

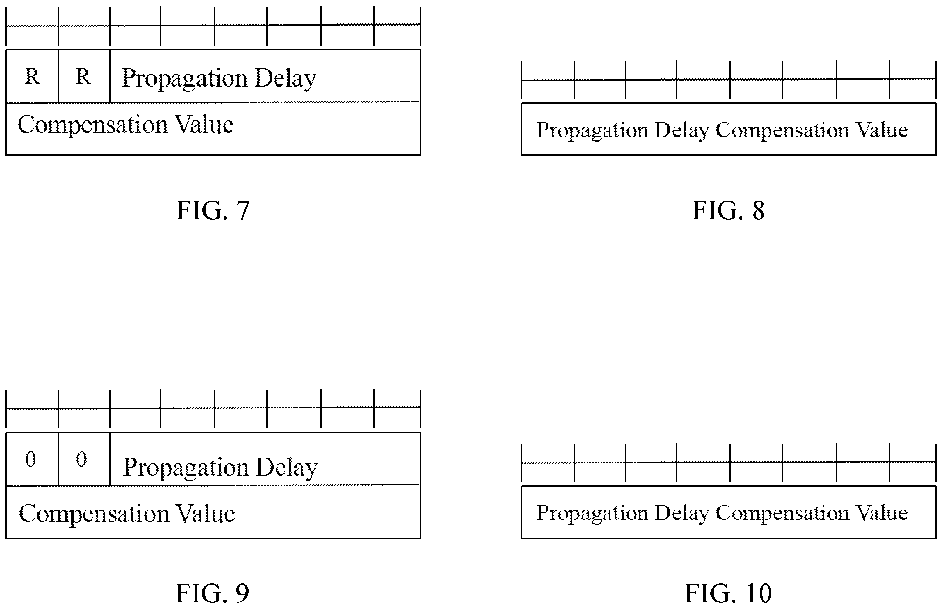

In this case, the real value or relative value is transmitted through the predefined MAC CE, and the Logical Channel ID (LCID) reserved value in the DL-SCH that indicates the predefined MAC CE format. In an example, for the fixed granularity case, the MAC CE formats of the real value and relative value (in 10ns units) are shown in FIG. 7 and FIG. 8, respectively. In another example, for the variable granularity case, the MAC CE formats of the real value and relative value (in 10ns units) are shown in FIG. 9 and FIG. 10, respectively. In FIG. 9, "00" means the current granularity is 10ns.

### 4. Examples of different granularities for propagation delay measurements

In some embodiments, when the UE uses a small subcarrier spacing (15 kHz, 30 kHz or 60 kHz) to transmit service information, the gNB measures the uplink signals of the UE through this subcarrier spacing. The gNB calculates a TA value with a smaller granularity or a propagation delay compensation value based on the measurement.

In these embodiments, the granularity of the measurement value can be fixed (e.g., as shown FIGS. 7 and 8) or variable (e.g., as shown in FIGS. 9 and 10).

In this embodiments, a fixed granularity is characterized by at least one of the following:
- The value is in nanoseconds; and
- The value is determined by multiplying the Timing Advance (TA) value of a predefined SCS (e.g., 15kHz) by different factors. In an example, this factor is 1/2, 1/4, 1/8, or 1/16.

In this embodiments, a variable granularity is characterized by at least one of the following:
- A granularity group is composed of multiple values in nanoseconds; and
- The granularity group is composed of multiple different granularities that are determined by multiplying the TA values corresponding to a predefined SCS (e.g., 15kHz) by different factors. In an example, this factor is 1/2, 1/4, 1/8, or 1/16.

If the granularity of the measured value is variable, an indication indicating the granularity of the current measurement value should be included when sending the measurement value of the propagation delay.

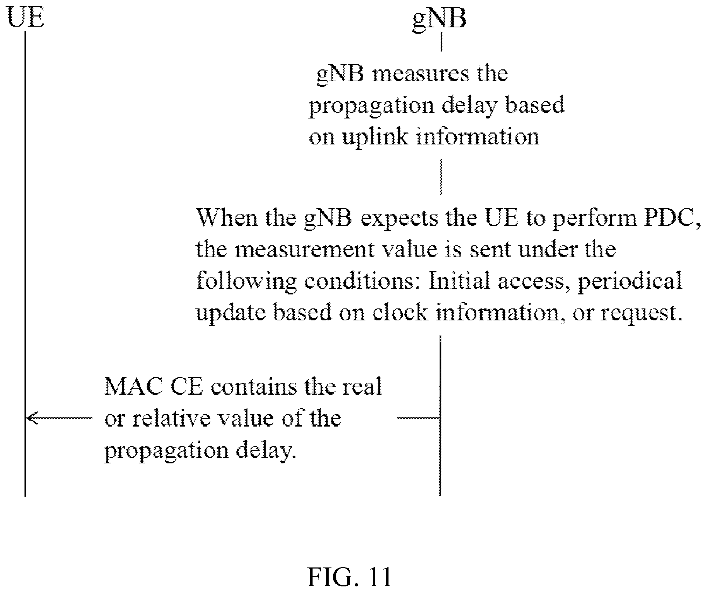

In some embodiments, as shown in FIG. 11, at least one of the following conditions are included to trigger the gNB to send the measured value:
- Initial access;
- gNB identifies that the current UE needs to perform PDC;
- gNB receives the reference time request;
- gNB satisfies the condition of periodically sending the clock information; and
- gNB identifies that the difference between the measured value and the last transmitted value is about to be greater than the maximum relative value.

In some embodiments, after the gNB obtains the TA value with a smaller granularity or a PDC value, the gNB sends measurement values using one of the following methods:
- The gNB transmits the PDC information through the predefined MAC CE. The LCID reserved value in the DL-SCH indicates the predefined MAC CE format that contains the PDC information. The PDC information includes a PDC value and/or TA with a smaller granularity. Based on the size of the bit-field occupied by the MAC CE, the UE can distinguish between the real value and relative value of the PDC.
- The gNB transmits the PDC information through the extended MAC RAR and extended Timing Advance Command MAC CE. The PDC information contains the TA with a smaller granularity. In the case of variable granularity, the RRC message indicates the granularity of the TA value, and contains at least one of the following: RRCReestablishment, RRCReconfiguration, RRCResume, RRCReject, and RRCSetup.

### 5. Examples of performing propagation delay compensation

In some embodiments, when the UE has PDC capability, the gNB determines whether the reference time information that needs to be sent to the UE needs to be PDC. Furthermore, based on the result of the determination, the gNB transmits an indication to the UE that signals whether to perform the PDC.

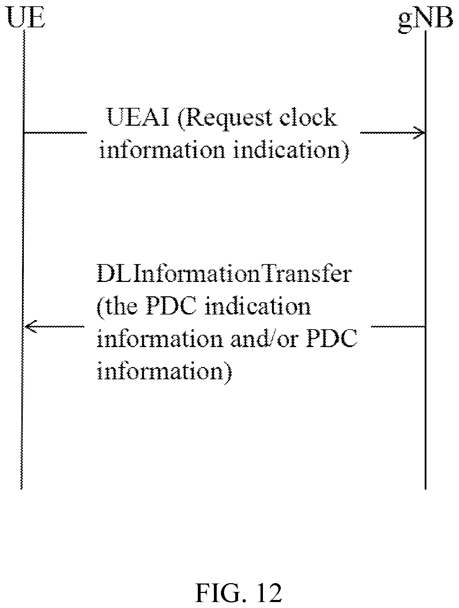

As shown in FIG. 12, when the UE sends the UE Assistance Information (UEAI) containing a request for time information to the gNB, the gNB sends the reference time information to the UE through unicast or broadcast, and indicates whether the UE should perform the PDC operation.

In the case of unicast transmitting time information, the gNB sends to the UE a message indicating whether to perform the PDC. If the message indicates that the UE should perform the PDC operation, the UE uses the actual measurement value to compensate for the time information. Herein, gNB should further provide the PDC information, which at least includes one of the following: updated TA value, TA with a smaller granularity, PDC value, and a valid TA value with a large subcarrier spacing.

In this example, the above information requires the UE to receive the PDC indication information and/or PDC information, and they can be received using either the DLInformationTransfer message or the ReferenceTimeInfo field.

### 6. Example methods and implementation of the disclosed technology

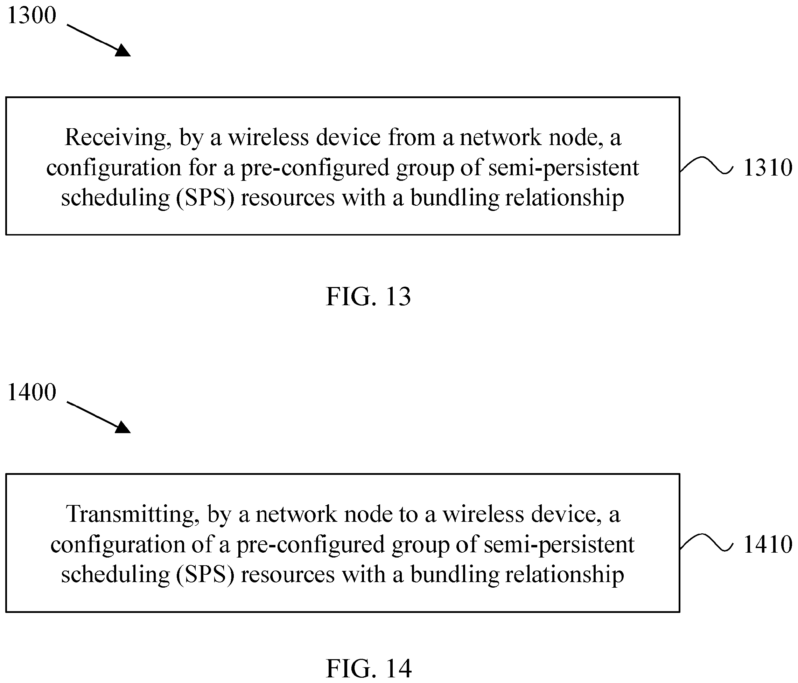

FIG. 13 shows an example of a wireless communication method 1300. The method 1300 includes, at operation 1310, receiving, by a wireless device from a network node, a configuration for a pre-configured group of semi-persistent scheduling (SPS) resources with a bundling relationship.

FIG. 14 shows an example of a wireless communication method 1400. The method 1400 includes, at operation 1410, transmitting, by a network node to a wireless device, a configuration of a pre-configured group of semi-persistent scheduling (SPS) resources with a bundling relationship.

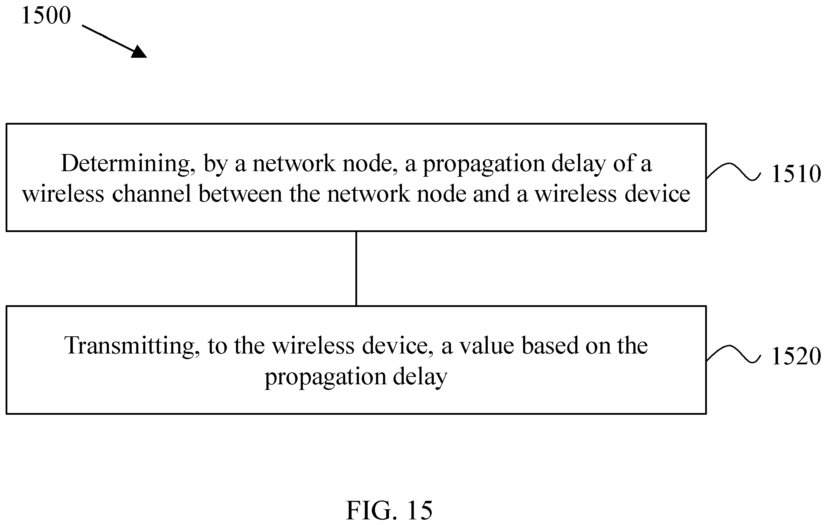

FIG. 15 shows an example of a wireless communication method 1500. The method 1500 includes, at operation 1510, determining, by a network node, a propagation delay of a wireless channel between the network node and a wireless device.

The method 1500 includes, at operation 1520, transmitting, to the wireless device, a value based on the propagation delay.

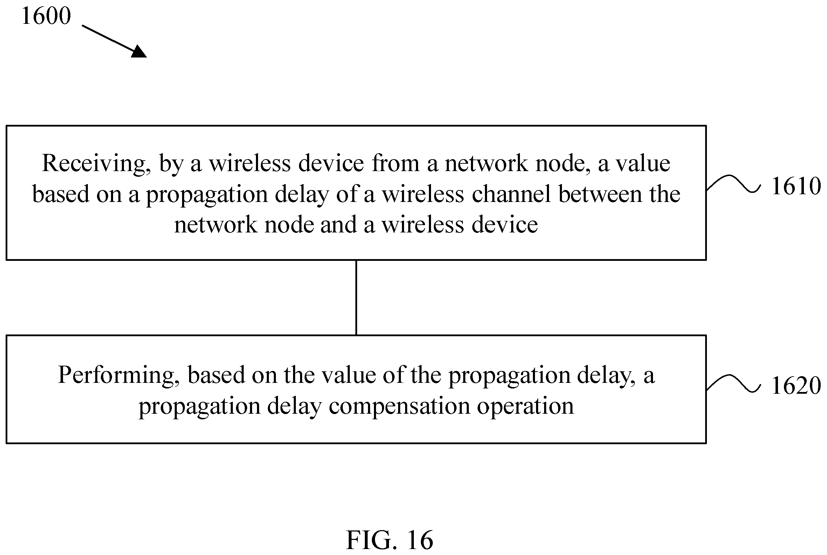

FIG. 16 shows an example of a wireless communication method 1600. The method 1600 includes, at operation 1610, receiving, by a wireless device from a network node, a value based on a propagation delay of a wireless channel between the network node and a wireless device.

The method 1600 includes, at operation 1620, performing, based on the value of the propagation delay, a propagation delay compensation operation.

Embodiments of the disclosed technology provide the following technical solutions for resource configuration using the burst spread parameter, which mitigate the data transmission delay problems caused by jitter.

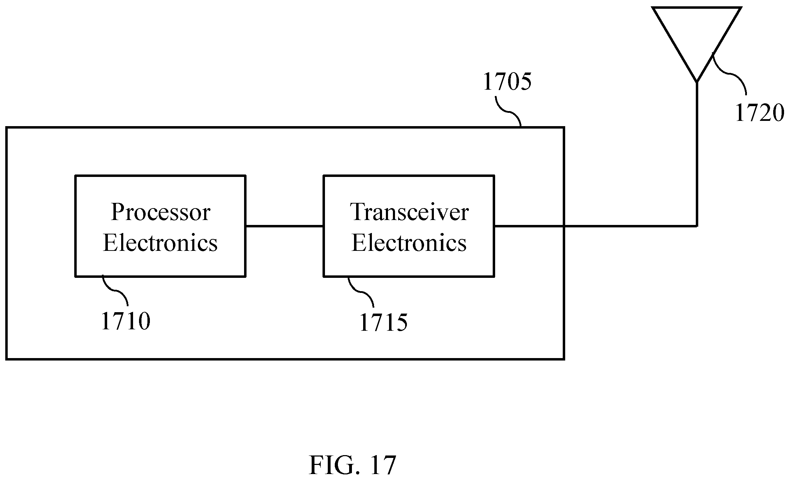

FIG. 17 is a block diagram representation of a portion of an apparatus, in accordance with some embodiments of the presently disclosed technology. An apparatus 1705, such as a base station or a wireless device (or UE), can include processor electronics 1710 such as a microprocessor that implements one or more of the techniques presented in this document. The apparatus 1705 can include transceiver electronics 1715 to send and/or receive wireless signals over one or more communication interfaces such as antenna(s) 1720. The apparatus 1705 can include other communication interfaces for transmitting and receiving data. Apparatus 1705 can include one or more memories (not explicitly shown) configured to store information such as data and/or instructions. In some implementations, the processor electronics 1710 can include at least a portion of the transceiver electronics 1715. In some embodiments, at least some of the disclosed techniques, modules or functions are implemented using the apparatus 1705.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable subcombination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A method of wireless communication, comprising:
determining, by a network node, a propagation delay of a wireless channel between the network node and a wireless device,
wherein a measurement of the propagation delay is of a variable granularity, wherein the variable granularity is selected from a granularity group whose elements are determined by multiplying timing advance, TA, values corresponding to a predefined subcarrier spacing, SCS, by respective factors;
receiving, by the network node from the wireless device, a request for reference time information, wherein the request is included in a UE Assistance Information, UEAI, message; and
in response to receiving the request, transmitting, by the network node, to the wireless device, a value based on the propagation delay, an indication of the variable granularity, and an indication whether to perform a propagation delay compensation operation.

2. The method of claim 1, wherein the value is a timing advance value, and wherein the timing advance value enables the wireless device to perform the propagation delay compensation operation based on the timing advance value.

3. The method of claim 1, wherein the indication whether to perform the propagation delay compensation operation is transmitted through a downlink information transfer message.

4. A method of wireless communication, comprising:
transmitting, by a wireless device to a network node, a request for reference time information, wherein the request is included in a UE Assistance Information, UEAI, message;
in response to transmitting the request, receiving, by the wireless device from the network node, a value based on a propagation delay of a wireless channel between the network node and the wireless device,
wherein a measurement of the propagation delay is of a variable granularity, wherein the variable granularity is selected from a granularity group whose elements are determined by multiplying timing advance, TA, values corresponding to a predefined subcarrier spacing, SCS, by respective factors;
receiving an indication of the variable granularity and an indication whether to perform a propagation delay compensation operation; and
performing, based on the value of the propagation delay, the propagation delay compensation operation.

5. The method of claim 4, wherein the value is a timing advance value, and wherein the wireless device performs the propagation delay compensation operation based on the timing advance value.

6. The method of claim 4, wherein the indication whether to perform the propagation delay compensation operation is received through a downlink information transfer message.

7. The method of any of claims 1 to 6, wherein the value based on the propagation delay is included in a medium access control, MAC, control element, CE.

8. The method of any of claims 1 to 7, wherein the network node is a gNodeB, gNB, and the wireless device is a user equipment, UE (111, 112, 113).

9. A wireless communications apparatus (1705) comprising a processor (1710), wherein the processor (1710) is configured to implement a method recited in any of claims 1 to 8.

10. A computer program product comprising a computer-readable program code stored thereupon, the code, when executed by a processor, causing the processor to implement a method recited in any of claims 1 to 8.

## Patentansprüche

1. Verfahren zur drahtlosen Kommunikation, das aufweist:
Bestimmen, durch einen Netzwerkknoten, einer Ausbreitungsverzögerung eines drahtlosen Kanals zwischen dem Netzwerkknoten und einem drahtlosen Gerät,
wobei eine Messung der Ausbreitungsverzögerung von variabler Granularität ist, wobei die variable Granularität aus einer Granularitätsgruppe ausgewählt wird, deren Elemente durch Multiplizieren von Zeitvorlauf, TA, Werten, die einem vordefinierten Unterträgerabstand, SCS, entsprechen, mit entsprechenden Faktoren bestimmt werden;
Empfangen, durch den Netzwerkknoten von dem drahtlosen Gerät, einer Anforderung von Referenzzeitinformationen, wobei die Anforderung in einer UE Assistenzinformation, UEAI, Nachricht enthalten ist; und
als Reaktion auf den Empfang der Anforderung, Übertragen, durch den Netzwerkknoten, an das drahtlose Gerät eines auf der Ausbreitungsverzögerung basierenden Wertes, einer Anzeige der variablen Granularität und einer Anzeige, ob eine Ausbreitungsverzögerungs-Kompensationsoperation durchgeführt werden soll.

2. Verfahren nach Anspruch 1, wobei der Wert ein Zeitvorlaufwert ist, und wobei der Zeitvorlaufwert es dem drahtlosen Gerät ermöglicht, die Ausbreitungsverzögerungs-Kompensationsoperation basierend auf dem Zeitvorlaufwert durchzuführen.

3. Verfahren nach Anspruch 1, wobei die Anzeige, ob die Ausbreitungsverzögerungs-Kompensationsoperation durchgeführt werden soll, durch eine Downlink-Informationsübertragungsnachricht übertragen wird.

4. Verfahren zur drahtlosen Kommunikation, das aufweist:
Übertragen, durch ein drahtloses Gerät an einen Netzwerkknoten, einer Anforderung von Referenzzeitinformationen, wobei die Anforderung in einer UE Assistenzinformation, UEAI-Nachricht, enthalten ist;
als Reaktion auf das Übertragen der Anforderung, Empfangen, durch das drahtlose Gerät von dem Netzwerkknoten, eines Wertes, der auf einer Ausbreitungsverzögerung eines drahtlosen Kanals zwischen dem Netzwerkknoten und dem drahtlosen Gerät basiert, wobei eine Messung der Ausbreitungsverzögerung von variabler Granularität ist, wobei die variable Granularität aus einer Granularitätsgruppe ausgewählt wird, deren Elemente durch Multiplizieren von Zeitvorlauf, TA, Werten, die einem vordefinierten Unterträgerabstand, SCS, entsprechen, mit entsprechenden Faktoren bestimmt werden;
Empfangen einer Anzeige der variablen Granularität und einer Anzeige, ob eine Ausbreitungsverzögerungs-Kompensationsoperation durchgeführt werden soll; und
Durchführen, basierend auf dem Wert der Ausbreitungsverzögerung, der Ausbreitungsverzögerungs-Kompensationsoperation.

5. Verfahren nach Anspruch 4, wobei der Wert ein Zeitvorlaufwert ist und wobei das drahtlose Gerät die Ausbreitungsverzögerungs-Kompensationsoperation basierend auf dem Zeitvorlaufwert durchführt.

6. Verfahren nach Anspruch 4, wobei der Anzeige, ob die Ausbreitungsverzögerungs-Kompensationsoperation durchgeführt werden soll, durch eine Downlink-Informationsübertragungsnachricht empfangen wird.

7. Verfahren nach einem der Ansprüche 1 bis 6, wobei der auf der Ausbreitungsverzögerung basierende Wert in einem Medium Access Control, MAC, Steuerelement, CE, enthalten ist.

8. Verfahren nach einem der Ansprüche 1 bis 7, wobei der Netzwerkknoten ein gNodeB, gNB, ist und das drahtlose Gerät ein Benutzergerät, UE, ist (111, 112, 113).

9. Drahtlose Kommunikationsvorrichtung (1705), die einen Prozessor (1710) aufweist, wobei der Prozessor (1710) konfiguriert ist, ein Verfahren nach einem der Ansprüche 1 bis 8 zu implementieren.

10. Computerprogrammprodukt, das einen darauf gespeicherten computerlesbaren Programmcode aufweist, wobei der Code, wenn er von einem Prozessor ausgeführt wird, den Prozessor veranlasst, ein Verfahren nach einem der Ansprüche 1 bis 8 zu implementieren.

## Revendications

1. Procédé de communication sans fil, comprenant :
la détermination, par un nœud de réseau, d'un délai de propagation d'un canal sans fil entre le nœud de réseau et un dispositif sans fil,
où une mesure du délai de propagation est de granularité variable, ladite granularité variable étant sélectionnée dans un groupe de granularités dont les éléments sont déterminés en multipliant des valeurs d'avance temporelle, TA, correspondant à un espacement prédéfini des sous-porteuses, SCS, par des facteurs respectifs ;
la réception par le nœud de réseau, en provenance du dispositif sans fil, d'une demande d'informations sur le temps de référence, ladite demande étant comprise dans un message d'informations d'assistance à l'UE, UEAI; et,
en réponse à la réception de la demande, la transmission par le nœud de réseau au dispositif sans fil d'une valeur sur la base du délai de propagation, d'une indication de la granularité variable, et d'une indication s'il convient d'exécuter ou non une opération de compensation de délai de propagation.

2. Procédé selon la revendication 1, où la valeur est une valeur d'avance temporelle, et où ladite valeur d'avance temporelle permet l'exécution par le dispositif sans fil de l'opération de compensation de délai de propagation sur la base de la valeur d'avance temporelle.

3. Procédé selon la revendication 1, où l'indication d'exécution ou de non-exécution de l'opération de compensation de délai de propagation est transmise par un message de transfert d'informations en liaison descendante.

4. Procédé de communication sans fil, comprenant :
la transmission, par un dispositif sans fil à un nœud de réseau, d'une demande d'informations sur le temps de référence, ladite demande étant comprise dans un message d'informations d'assistance à l'UE, UEAI;
en réponse à la transmission de la demande, la réception par le dispositif sans fil, en provenance du nœud de réseau, d'une valeur sur la base d'un délai de propagation d'un canal sans fil entre le nœud de réseau et le dispositif sans fil,
où une mesure du délai de propagation est de granularité variable, ladite granularité variable étant sélectionnée dans un groupe de granularités dont les éléments sont déterminés en multipliant des valeurs d'avance temporelle, TA, correspondant à un espacement prédéfini des sous-porteuses, SCS, par des facteurs respectifs ;
la réception d'une indication de la granularité variable et d'une indication s'il convient d'exécuter ou non une opération de compensation de délai de propagation ; et
l'exécution, sur la base de la valeur du délai de propagation, de l'opération de compensation de délai de propagation.

5. Procédé selon la revendication 4, où la valeur est une valeur d'avance temporelle, et où le dispositif sans fil exécute l'opération de compensation de délai de propagation sur la base de la valeur d'avance temporelle.

6. Procédé selon la revendication 4, où l'indication d'exécution ou de non-exécution de l'opération de compensation de délai de propagation est reçue par un message de transfert d'informations en liaison descendante.

7. Procédé selon l'une des revendications 1 à 6, où la valeur basée sur le délai de propagation est comprise dans un élément de commande, CE, d'accès au support, MAC.

8. Procédé selon l'une des revendications 1 à 7, où le nœud de réseau est un gNodeB, gNB, et le dispositif sans fil est un équipement utilisateur, UE (111, 112, 113).

9. Appareil de communication sans fil (1705) comprenant un processeur (1710), ledit processeur (1710) étant configuré pour mettre en œuvre un procédé selon l'une des revendications 1 à 8.

10. Produit de programme informatique stockant un code de programme lisible par ordinateur, dont l'exécution par un processeur entraîne la mise en œuvre par ledit processeur d'un procédé selon l'une des revendications 1 à 8.
